# EUROPEAN PATENT APPLICATION

(11) **EP 4 711 190 A1**
(43) Date of publication of application: **18.03.2026**
(21) Application number: 25194623.2
(22) Date of filing: 07.08.2025
(51) Int. Cl.: B60L 53/14, B60L 53/30, B60L 53/66

(54) **A SYSTEM AND A METHOD FOR CHARGING A VEHICLE**

(30) Priority: 28.08.2024 IN 202441065017
(71) Applicant: TVS Motor Company Limited, 600006 Chennai (IN)
(72) Inventor: Pattabiraman, Abiram, 600006 Chennai (IN); Sagare, Datta Rajaram, 600006 Chennai (IN); Patil, Yogesh Devidas, 600006 Chennai (IN)
(74) Representative: Patentanwaltskanzlei Matschnig & Forsthuber OG

(57) **Abstract**

The present invention relates to a system (100) and a method (200) for charging a vehicle (10). The system (100) has a charging station (102) to support a plurality of charging communication protocols, and a control unit (104) disposed in the charging station (102). The control unit (104) is configured to interact with the vehicle (10) for receiving one or more pre-defined parameters and extract protocol information indicative of a charging communication protocol of the vehicle (10) based on the one or more pre-defined parameters. The control unit (104) is then configured to initiate the charging of the vehicle (10) based on the extracted protocol information. The control unit (104), upon receiving the protocol information of the vehicle (10), switches the charging communication protocol of the charging station (102) to align with the charging communication protocol of the vehicle (10) for charging the vehicle (10).

## Description

### FIELD OF THE INVENTION

The present invention generally relates to a vehicle. More particularly, the present invention relates to a system and a method for charging a low voltage vehicle and a high voltage vehicle.

### BACKGROUND OF THE INVENTION

With advancement in vehicle technologies, there is a great focus on improving a vehicle charging experience and an enhancement of a battery performance. One or more battery packs of a vehicle are charged with the help of a charging interface. The charging interface is adapted to charge the battery packs by routing a charging current from a power source to the battery packs. A conventional charging interface such as a charging connector supports single charging communication protocol i.e., either the charging communication protocol of a Light Electric Vehicle (LEV) or the charging communication protocol of a High Voltage (HV) vehicle. The vehicles such as two-wheeled vehicles and three-wheeled vehicles are LEV vehicles, and the charging communication protocol of the LEV vehicle is known as LEVDC charging communication protocol. Similarly, the four-wheeled vehicles and other such type of vehicles are HV vehicles and the charging communication protocol of the HV vehicles is known as Combined Charging System (CCS) charging communication protocol.

In other words, there does not exist a single vehicle charging interface that can be used for charging both the LEVDC vehicles and the HV fast charging vehicles. This is mainly due to different charging communication protocols for two/three-wheeled vehicles and four-wheeled vehicles and also because of different charging requirements, in terms of charging power, charging time, AC/DC charging, and the like.

As is generally known, the HV vehicles are adapted to use Power Line Communication (PLC) standard for charging the vehicles which requires high data transfer rates, whereas the LEVDC vehicles are adapted to use Controller Area Network (CAN) communication protocol which requires low data transfer rates. Therefore, the users of the two-wheeled vehicles, three-wheeled vehicles and the four-wheeled vehicles face problems due to different charging interface available for different charging communication protocol standards of the vehicles. The existing charging interfaces can be used either for light vehicles such as two-wheeled vehicles and three-wheeled vehicles or heavy vehicles such as four-wheeled vehicles.

Further, a single household may have both LEVDC vehicles as well as HV vehicles. This is typically true for developing countries like India. However, in order to charge different vehicles of the same household, different charging interfaces are required. This will increase cost as well as inconvenience to the customer owing to different charging interfaces and also owing to different charging stations which may be available at different distances, which is undesirable.

Thus, there is a need in the art for a system and a method for charging a vehicle, which addresses at least the aforementioned problems.

### SUMMARY OF THE INVENTION

In one aspect, the present invention relates to a system for charging a vehicle. The system has a charging station configured to support a plurality of charging communication protocols. The system further has a control unit disposed in the charging station. The control unit is configured to interact with the vehicle for receiving one or more pre-defined parameters and extract protocol information indicative of a charging communication protocol of the vehicle based on the one or more pre-defined parameters. The control unit is further configured to initiate the charging of the vehicle based on the extracted protocol information. The control unit, upon receiving the protocol information of the vehicle, switches the charging communication protocol of the charging station to align with the charging communication protocol of the vehicle for charging the vehicle.

In an embodiment of the invention, the plurality of charging communication protocols comprises at least one of a Light Vehicle (LV) charging communication protocol and a Combined Charging System (CCS) charging communication protocol.

In an embodiment of the invention, the one or more pre-defined parameters comprise user authentication information, payment information, and vehicle information.

In an embodiment of the invention, the charging station has a charging interface connector. The charging interface connector is configured to support the plurality of charging communication protocols for catering to charging of low voltage vehicles and high voltage vehicles. The control unit is configured to alter a supply to a plurality of pins of the charging interface connector based on the charging communication protocol of the vehicle.

In an embodiment of the invention, the control unit is configured to communicate with a charging management unit. The charging management unit is configured to be in communication with a Telematics Control Unit (TCU) of the vehicle.

In an embodiment of the invention, the system has a display unit. The display unit is configured to be in communication with the control unit and display a selected charging communication protocol of the charging station to a user.

In an embodiment of the invention, the control unit, upon detecting the LV charging communication protocol of the vehicle, is configured to switch the charging communication protocol of the charging station to align with the LV charging communication protocol of the vehicle. Further, a control pilot line of the charging interface connector is configured for detection of a connection of a vehicle charging port with the charging interface connector.

In an embodiment of the invention, the control unit, upon detecting the CCS charging communication protocol of the vehicle, is configured to switch the charging communication protocol of the charging station to align with the CCS charging communication protocol of the vehicle. Further, the control pilot line of the charging interface connector is configured to function as a communication line between the vehicle charging port and the charging interface connector.

In an embodiment of the invention, the control unit, based on an unsuccessful detection of the charging communication protocol of the vehicle, is configured to generate an error command.

In another aspect, the present invention relates to a method for charging the vehicle. The method has the step of receiving, by the control unit, the one or more pre-defined parameters of the vehicle based on an interaction with the vehicle. The method further has the step of extracting, by the control unit, the protocol information indicative of the charging communication protocol of the vehicle based on the one or more pre-defined parameters. The method further has the step of switching, by the control unit, the charging communication protocol of the charging station to align with the charging communication protocol of the vehicle. Lastly, the method has the step of initiating, by the control unit, the charging of the vehicle based on the charging communication protocol of the vehicle.

In an embodiment of the invention, the plurality of charging communication protocols comprises at least one of the Light Vehicle (LV) charging communication protocol and the Combined Charging System (CCS) charging communication protocol.

In an embodiment of the invention, the one or more pre-defined parameters comprise the user authentication information, payment information, and vehicle information.

In an embodiment of the invention, the method has the step of altering a supply to a plurality of pins of a charging interface connector based on the charging communication protocol of the vehicle. The charging station has the charging interface connector configured to support the plurality of charging communication protocols for catering to charging of low voltage vehicles and high voltage vehicles. The method further has the step of displaying, by the display unit, the selected charging communication protocol of the charging station to the user.

In an embodiment of the invention, the method has the step of switching, by the control unit, the charging communication protocol of the charging station to align with the LV charging communication protocol of the vehicle, based on the detection of the LV charging communication protocol of the vehicle. The control pilot line of the charging interface connector is configured for the detection of a connection of the vehicle charging port with the charging interface connector. The method further has the step of switching, by the control unit, the charging communication protocol of the charging station to align with the CCS charging communication protocol of the vehicle, based on the detection of the CCS charging communication protocol of the vehicle. The control pilot line of the charging interface connector is configured to function as the communication line between the vehicle charging port and the charging interface connector. Lastly, the method has the step of generating, by the control unit, the error command, based on the unsuccessful detection of the charging communication protocol of the vehicle.

### BRIEF DESCRIPTION OF THE DRAWINGS

Reference will be made to embodiments of the invention, examples of which may be illustrated in accompanying figures. These figures are intended to be illustrative, not limiting. Although the invention is generally described in context of these embodiments, it should be understood that it is not intended to limit the scope of the invention to these particular embodiments.
Figure 1 illustrates a block diagram of a system for charging a vehicle, in accordance with an embodiment of the present invention.
Figure 2 illustrates a flow diagram of a method for charging the vehicle, in accordance with an embodiment of the present invention.
Figure 3 illustrates a circuit diagram for a Combined Charging System (CCS) charging communication protocol of the vehicle, in accordance with an exemplary embodiment of the present invention.
Figure 4 illustrates a circuit diagram for a Light Vehicle (LV) charging communication protocol of the vehicle, in accordance with an exemplary embodiment of the present invention.

### DETAILED DESCRIPTION OF THE INVENTION

Various features and embodiments of the present invention here will be discernible from the following further description thereof, set out hereunder.

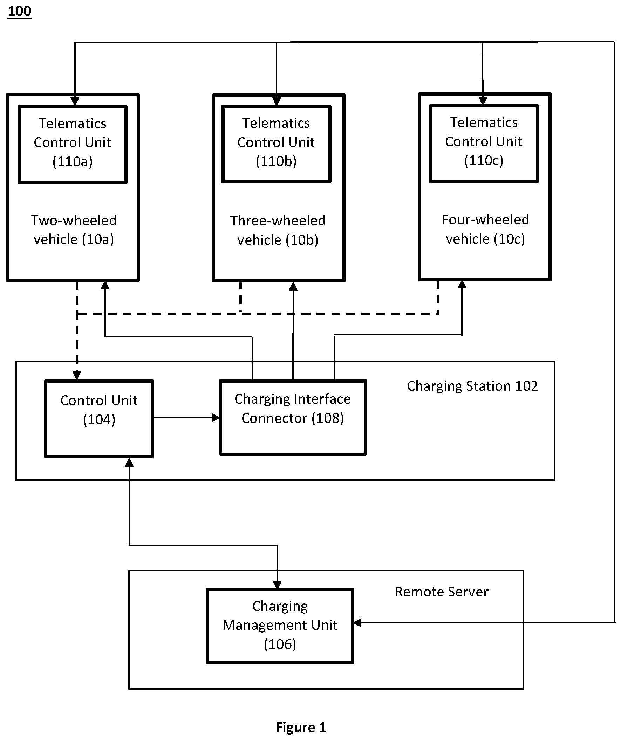

Figure 1 illustrates a block diagram of the system 100 for charging the vehicle 10, in accordance with an embodiment of the present invention. The present invention provides the system 100 for charging the one or more battery packs of the vehicle 10. As disclosed herein, the one or more battery packs comprises one or more batteries connected together in a series connection, a parallel connection or a series-parallel connection as per requirement. In an embodiment and as shown in Figure 1, the vehicle 10 is a two-wheeled vehicle 10a, a three-wheeled vehicle 10b, a four-wheeled vehicle 10c and a multi-wheeled vehicle as per requirement. In yet another embodiment, the vehicle 10 is an electric vehicle or a hybrid vehicle. In an embodiment, the one or more battery packs are configured to be disposed in the vehicle 10. The one or more battery packs are configured to provide the desired power output for the functioning of the vehicle 10. In an embodiment, the vehicle 10 has a Telematics Control Unit (TCU) 110 configured for controlling functions such as wireless tracking, diagnostics and communication to and from the vehicle 10 as depicted in Figure 1. In a non-limiting embodiment, the TCU 110 is also referred to as 'Vehicle Controller'. As provided hereinbelow, the terms 'TCU' and 'Vehicle Controller' are interchangeably used. The two-wheeled vehicle 10a has the TCU 110a, the three-wheeled vehicle has the TCU 110b and the four-wheeled vehicle 10c has the TCU 110c. Also, the communication from the TCU 110 of the vehicle 10 is shown with the help of dotted lines and the other communications to and from the vehicle 10 and other components thereof are shown with the help of solid lines as shown in Figure 1.

The system 100 further comprises a charging station 102. As described herein below, the charging station 102 refers to a power supply equipment for supplying an electrical power for charging the one or more battery packs of the vehicle 10. The charging station 102 is also referred to as 'Electric Vehicle Supply Equipment (EVSE)'. As provided hereinbelow, the terms 'charging station' and EVSE are interchangeably used. As shown in Figure 1, the charging station 102 has a control unit 104 and a charging interface connector 108. In a non-limiting embodiment, the control unit 104 is also referred to as EVSE Controller. As provided hereinbelow, the terms 'control unit' and 'EVSE Controller' are interchangeably used. In a non-limiting embodiment, the charging interface connector 108 is also referred to as EVSE Connector. As provided hereinbelow, the terms 'charging interface connector' and 'EVSE Connector' are interchangeably used. The charging station 102 is configured to support a plurality of charging communication protocols. In a non-limiting embodiment, the charging station 102 has a Supply Equipment Charging Controller (SECC) disposed inside the charging station 102 to support the plurality of charging communication protocols. The charging communication protocol of the vehicle 10 helps in deciding the charging parameters for the vehicle 10, thereby facilitating a communication between the vehicle 10 and the charging station 102. In an embodiment, the plurality of charging communication protocols comprises at least one of a Light Vehicle (LV) charging communication protocol and a Combined Charging System (CCS) charging communication protocol. The LV charging communication protocol is generally used for the two-wheeled vehicles 10a and three-wheeled vehicles 10b. Similarly, the CCS charging communication protocol is used for the four-wheeled vehicles 10c and other multi-wheeled vehicles as per requirement.

In an embodiment, the charging station 102 is in communication with a charging management unit 106. The charging management unit 106 is configured to manage the charging operations of the vehicle 10. In a non-limiting embodiment, the charging management unit 106 is of an Original Equipment Manufacturer (OEM) and is configured to be located inside the charging station 102. In a non-limiting embodiment, the charging management unit 106 is of the OEM and is configured to located in a remote server. In yet another non-limiting embodiment, the charging management unit 106 is configured to be co-located in the charging station 102 as well as the remote server.

The system 100 further comprises the control unit 104. The control unit 104 is disposed in the charging station 102. In an embodiment and as shown in Figure 1, the control unit 104 is configured to be in communication with the charging management unit 106. The control unit 104 is configured to interact with the vehicle 10 for receiving one or more pre-defined parameters. In an embodiment, the one or more pre-defined parameters comprises user authentication information, payment information, and vehicle information. In a non-limiting embodiment, the control unit 104 is configured to receive an input from the user for initiating the charging of the vehicle 10. The input is received in the form of at least one of a tapping of a card on the charging station 102, scanning of a Quick Response (QR) code on the charging station 102, and the like. When the card is tapped on the charging station 102 or the QR code is scanned, the details pertaining to the user are authenticated. Once the user authentication is successfully completed, the control unit 104 disposed in the charging station 102 is configured to interact with the vehicle 10 and the charging management unit 106 to retrieve the details pertaining to the vehicle 10 for initiating the charging of the vehicle 10. In an embodiment, the following methods are used for initiating the charging of the vehicle 10: (1) By using an appropriate application on a user device for the specific fast charger; (2) By using a network-specific Radio Frequency Identification (RFID) card to activate the charging process; and (3) By using a start button on the charging station 102. However, if the charging process does not start automatically, then the user is allowed to follow the prompts on the screen to begin the charging of the vehicle 10.

The control unit 104 is further configured to extract protocol information indicative of the charging communication protocol of the vehicle 10 based on the one or more pre-defined parameters. In an embodiment, the protocol information is extracted from the charging management unit 106 to identify the charging communication protocol of the vehicle 10. In a non-limiting embodiment, the protocol information identifies the charging communication protocol of the vehicle 10. The protocol information identifies the charging communication protocol of the vehicle 10 either as the LV charging communication protocol of the vehicle 10 or the CCS charging communication protocol of the vehicle 10.

As further depicted in Figure 1, the charging station 102 comprises the charging interface connector 108. The charging interface connector 108 is configured to support the plurality of charging communication protocols for catering to the two-wheeled vehicle 10a, the three-wheeled vehicle 10b and the four-wheeled vehicle 10c. Also, the charging interface connector 108 is configured to support the plurality of charging communication protocols for catering to charging of low voltage vehicles and high voltage vehicles. Therefore, the present invention allows the same charging interface connector 108 to charge the two-wheeled vehicle 10a, the three-wheeled vehicle 10b and the four-wheeled vehicle 10c for the CCS communication charging protocol as well as the LEVDC communication charging protocol, thereby enhancing the user experience and market attractiveness.

In an embodiment, the control unit 104 is then configured to initiate the charging of the vehicle 10 based on the extracted protocol information. The control unit 104, upon receiving the protocol information of the vehicle 10, is configured to switch the charging communication protocol of the charging station 102 to align with the charging communication protocol of the vehicle 10 for charging the vehicle 10. In a non-limiting embodiment, the control unit 104, upon detecting the LV charging communication protocol of the vehicle 10, being configured to switch the charging communication protocol of the charging station 102 to align with the LV charging communication protocol of the vehicle 10. The control unit 104 is configured to switch the communication over CAN and a Control Pilot line is used only for the detection of vehicle connection. Then, the CAN communication is implemented within the charging station 102. In a further embodiment, the control unit 104, upon detecting the CCS charging communication protocol of the vehicle 10, is configured to switch the charging communication protocol of the charging station 102 to align with the CCS charging communication protocol of the vehicle 10. The control unit 104 is configured to switch the communication over the Control Pilot line and then, the PLC/CCS communication is implemented within the charging station 102. Subsequently, the PLC communication is converted to the CAN communication. Hence, the same control pilot (CP) line is used for the LEVDC and CCS charging communication protocol. Based on the selected charging communication protocol, the control unit 104 is configured to switch to one of the protocols accordingly. Therefore, the present invention provides the interoperability of the charging station 102 based on the extracted protocol information pertaining to the charging communication protocol of the vehicle 10.

Further, the vehicle 10 is configured to support either the LEVDC charging communication protocol or the CCS charging communication protocol and not both. Hence, the control unit 104 is configured to switch the charging communication protocol of the charging station 102 according to the charging communication protocol of the vehicle 10 and hence, the charging station 102 supports both the LEVDC charging communication protocol as well as the CCS charging communication protocol.

In order to support both the charging communication protocols of the vehicle 10, the control unit 104 is configured to alter a supply to a plurality of pins of the charging interface connector 108 provided on the charging station 102 based on the charging communication protocol of the vehicle 10. In an embodiment, the plurality of the pins comprises at least one of a Control Pilot (CP) pin, a Proximity Pilot (PP) pin, and a Protective Earth (PE) pin. The CP pin is used for the communication between the charging station 102 and the vehicle 10. Therefore, the CP line of the charging interface connector 108 is configured to function as a communication line between a vehicle charging port and the charging interface connector 108. The CP line of the charging interface connector 108 is further configured for the detection of a connection of the vehicle charging port with the charging interface connector 108. The PP pin is configured to prevent the movement of the vehicle 10 when the vehicle 10 is connected to the charging station 102. The PP pin is also used for the detection of the charging cable current load capacity, so that the PP pin is able to limit the current that is sourced to the vehicle 10. The PE pin is used as a line that is earth grounded on the charging station 102 to prevent electric shocks. In a non-limiting embodiment, the charging interface connector 108 has either receptacles or pins or both. The pins are male connector and the receptables are female connector.

In a non-limiting embodiment, the control unit 104, based on an unsuccessful detection of the charging communication protocol of the vehicle 10 is configured to generate an error command. Therefore, if the control unit 104 is unable to detect the charging communication protocol of the vehicle 10, then the control unit 104 is configured to generate an error. The error is displayed to the user.

In yet another embodiment, the control unit 104 is configured to be in communication with the charging management unit 106. The charging management unit 106 is configured to be in communication with the TCU 110 of the vehicle 10. The system 100 further has a display unit 112. The display unit 112 is configured to be in communication with the control unit 104. The display unit 112 is configured to display a selected charging communication protocol of the charging station 102 to the user. Therefore, the user is informed about the charging communication protocol of the charging station 102 at all times during the charging of the one or more battery packs of the vehicle 10.

In an exemplary embodiment, the charging initiation techniques as described hereinabove requires the user of the vehicle 10 to scan the QR code available on the charging station 102 or use the RFID based card to enable/initialize the charging process. The present invention adds an extra logic to the existing initiation process, by additionally detecting the type of communication interface available on the vehicle 10. The same is detected from the TCU 110 of the vehicle 10 i.e., the CCS charging communication protocol or the LEVDC charging communication protocol of the vehicle 10.

Therefore, the present invention ensures that no user intervention is required, and the present invention automatically adapts between the CCS charging communication protocol and the LEVDC charging communication protocol on the charging station 102. Hence, the present invention increases the overall charging stations 102 for the user as the same charging station 102 can be used for charging the two-wheeled vehicle 10a and the three-wheeled vehicle 10b as well as four-wheeled vehicle 10c. The charging communication protocol used by the charging station 102 is then displayed to the user via the user device for user's reference. However, the charging communication protocol is displayed only as a notification to the user so that the user is not able to change the charging communication protocol on the charging station 102, thereby enhancing the safety of the user.

In an exemplary embodiment, the present invention is directed towards providing a harmonized LEVDC and CCS charging communication protocol which can be implemented between the electric vehicle 10 and the charging station 102 using the single charging interface connector 108. Therefore, the single charging interface connector 108 is configured to support both the CCS and the LEVDC charging communication protocol. The present invention further resolves the charging incompatibility of the electric vehicle 10 with the charging station 102 due to different charging communication protocol of the electric vehicle 10. The present invention allows the two-wheeled electric vehicle 10a and the three-wheeled electric vehicle 10b to be charged in a four-wheeled charging station 102 that supports both the PLC and CAN communication. Therefore, the present invention allows the two-wheeled vehicles 10a and the three-wheeled vehicles 10b to be charged using the same charging connector interface 108 that supports both the PLC and CAN communication in addition to be able to be charged in the two-wheeled and the three-wheeled charging station 102. Therefore, the present invention addresses the communication interoperability between the four-wheeled charging stations and two/three-wheeled charging stations. The two/three-wheeled charging station 102 is configured to charge the four-wheeled electric vehicle 10c by providing the required amount of the power demand by the electric vehicle 10.

In an example, the charging communication protocol allows the electric vehicle 10 to be charged in the four-wheeled fast charging stations 102 as well as two/three-wheeled fast charging stations 102. The SECC (control unit 104) inside the charging station 102 is configured to support both the LEVDC charging communication protocol and the CCS charging communication protocols. Furthermore, the charging management unit 106 is adapted to support both the LEVDC charging communication protocol and the CCS charging communication protocols. The SECC designed within the charging station 102 is configured to switch between the two communication protocols based on the charging communication protocol of the electric vehicle 10. Therefore, if the electric vehicle 10 uses the CCS charging communication protocol, then the charging station 102 is configured to switch to the CCS charging communication protocol and if the electric vehicle 10 uses LEVDC charging communication protocol, then the charging station 102 is configured to switch to the LEVDC charging communication protocol.

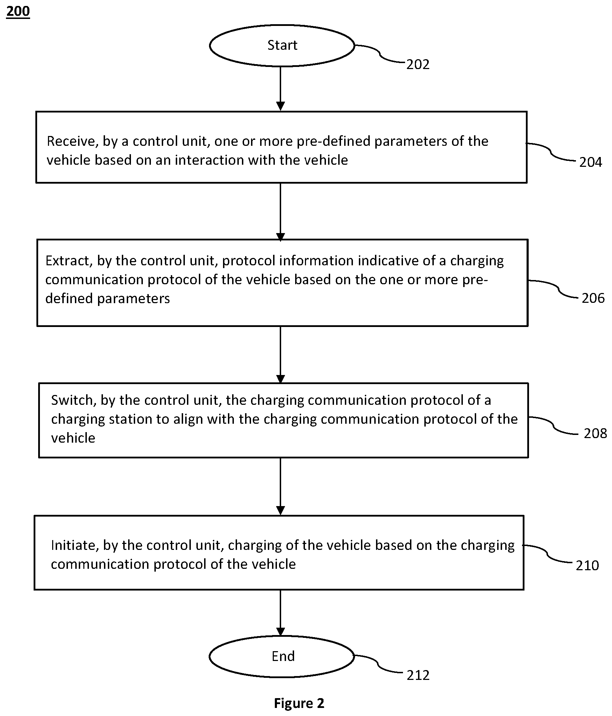

Figure 2 illustrates a flow diagram of a method 200 for charging the vehicle 10, in accordance with an embodiment of the present invention. The steps involved in the method 200 for charging the vehicle 10 are illustrated in Figure 2. The present invention provides the method 200 for charging the one or more battery packs of the vehicle 10. As disclosed herein, the one or more battery packs comprises one or more batteries connected together in a series connection, a parallel connection or a series-parallel connection as per requirement. In an embodiment, the one or more battery packs are configured to be disposed in the vehicle 10. The one or more battery packs are configured to provide the desired power output for the functioning of the vehicle 10.

As illustrated in Figure 2, the method 200 starts at step 202. The charging current to one or more battery packs is provided by the charging station 102. At step 204, the method 200 receives the one or more pre-defined parameters of the vehicle 10 based on the interaction with the vehicle 10 by the control unit 104. In an embodiment, the one or more pre-defined parameters comprises user authentication information, payment information, and vehicle information. In a non-limiting embodiment, the control unit 104 is configured to receive the input from the user for initiating the charging of the vehicle 10. The input is received in the form of at least one of a tapping of a card on the charging station 102, scanning of the QR code on the charging station 102, and the like. When the card is tapped on the charging station 102 or the QR code is scanned, the details pertaining to the user are authenticated. Once the user authentication is successfully completed, the control unit 104 disposed in the charging station 102 is configured to interact with the vehicle 10 to retrieve the details pertaining to the vehicle 10 for initiating the charging of the vehicle 10.

At step 206, the control unit 104 extracts the protocol information indicative of the charging communication protocol of the vehicle 10 based on the one or more pre-defined parameters. In an embodiment, the plurality of charging communication protocols comprises at least one of the Light Vehicle (LV) charging communication protocol and the Combined Charging System (CCS) charging communication protocol. In a non-limiting embodiment, the protocol information identifies the charging communication protocol of the vehicle 10. The protocol information identifies the charging communication protocol of the vehicle 10 either as the LV charging communication protocol of the vehicle 10 or the CCS charging communication protocol of the vehicle 10. In an embodiment, the charging station 102 comprises the charging interface connector 108. The charging interface connector 108 is configured to support the plurality of charging communication protocols for catering to the two-wheeled vehicle 10a, the three-wheeled vehicle 10b and the four-wheeled vehicle 10c. In an embodiment, the charging interface connector 108 is configured to support the plurality of charging communication protocols for catering to the low voltage vehicles and the high voltage vehicles. Therefore, the present invention allows the same charging interface connector 108 to charge the vehicles 10 for the CCS communication charging protocol as well as the LEVDC communication charging protocol, thereby enhancing the user experience and market attractiveness.

As further illustrated in Figure 2, at step 208, the control unit 104 is configured to switch the charging communication protocol of the charging station 102 to align with the charging communication protocol of the vehicle 10. In a further embodiment, the control unit 104 is configured to switch the charging communication protocol of the charging station 102 to align with the LV charging communication protocol of the vehicle 10, based on a detection of the LV charging communication protocol of the vehicle 10. In yet another embodiment of the invention, the control unit 104 is configured to switch the charging communication protocol of the charging station 102 to align with the CCS charging communication protocol of the vehicle 10, based on the detection of the CCS charging communication protocol of the vehicle 10. Lastly, the control unit 104 is configured to generate the error command, based on an unsuccessful detection of the charging communication protocol of the vehicle 10. Therefore, the present invention provides the interoperability of the charging station 102 based on the extracted protocol information pertaining to the charging communication protocol of the vehicle 10.

In order to support both the communication charging protocols of the vehicle 10, the control unit 104 is configured to alter the supply to a plurality of pins of the charging interface connector 108 provided on the charging station 102 based on the charging communication protocol of the vehicle 10. In an embodiment, the plurality of the pins comprises at least one of the Control Pilot (CP) pin, the Proximity Pilot (PP) pin and the Protective Earth (PE) pin. The CP pin is used for the communication between the charging station 102 and the vehicle 10. Therefore, the CP line of the charging interface connector 108 is configured to function as a communication line between the vehicle charging port and the charging interface connector 108. The CP line of the charging interface connector 108 is further configured for the detection of a connection of a vehicle charging port with the charging interface connector 108. The PP pin is configured to prevent the movement of the vehicle 10 when the vehicle 10 is connected to the charging station 102. The PP pin is also used for the detection of the charging cable current load capacity, so that the PP pin is able to limit the current that is sourced to the vehicle 10. The PE pin is used as a line that is earth grounded on the charging station 102 to prevent electric shocks.

Lastly, at step 210, the control unit 104 initiates the charging of the vehicle 10 based on the charging communication protocol of the vehicle 10. In an embodiment, the control unit 104 is configured to communicate with the charging management unit 106. The charging management unit 106 is configured to be in communication with the TCU 110 of the vehicle 10. The system 100 further has the display unit 112. The display unit 112 is configured to be in communication with the control unit 104. The display unit 112 is configured to display a selected charging communication protocol of the charging station 102 to the user. Therefore, the user is informed about the charging communication protocol of the charging station 102 at all times during the charging of the one or more battery packs of the vehicle 10. The method 200, subsequently, terminates at step 212.

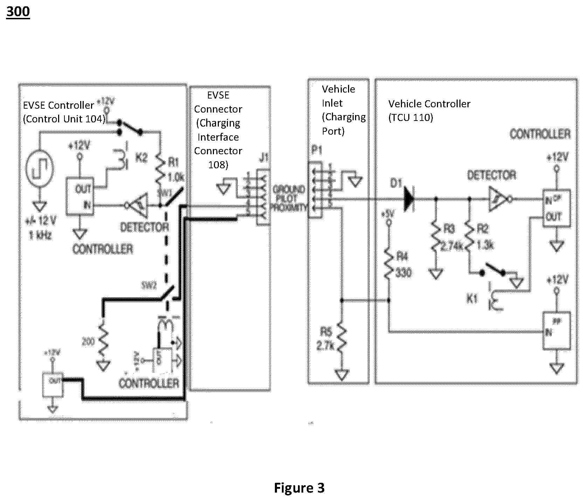

Figure 3 illustrates a circuit diagram 300 for a Combined Charging System (CCS) charging communication protocol of the vehicle 10, in accordance with an exemplary embodiment of the present invention. The charging interface connector 108 on the charging station 102 is same for both the LEVDC charging communication protocol and the CCS charging communication protocol. Based on the charging communication protocol of the vehicle 10, the supply to the pins is altered. As depicted in Figure 3, pins 1 and 2 of the EVSE connector (charging interface connector 108) are for voltage supply (AC/DC), pin 3 is PE (ground), pin 4 is CP pin and pin 5 is PP pin. For the CCS charging communication protocol of the vehicle 10, switching unit SW1 is ON and switching unit SW2 is OFF. Each of the switching units SW1 and SW2 may be normally open contact type. For CCS charging communication protocol, the EVSE Controller (control unit 104) closes switching unit SW1 and keeps switching unit SW2 open. The pin 4 is at 0 V and pin 5 is connected to 12V on the charging station 102. However, on the vehicle side, the pin 4 is connected to 12V supply and the pin 5 is connected to the ground. In CCS charging communication protocol, the CP line is configured to function as a communication line for both the charging station 102 and the vehicle 10. Further, on interface of pin 4 of EVSE connector (charging interface connector 108) with pin 4 of vehicle inlet (charging port), the CCS charging communication protocol is communicated to the vehicle 10 by the interface of 0V of pin 4 and 12V of pin 5 on EVSE side (charging station 102) with the corresponding pins on the vehicle side.

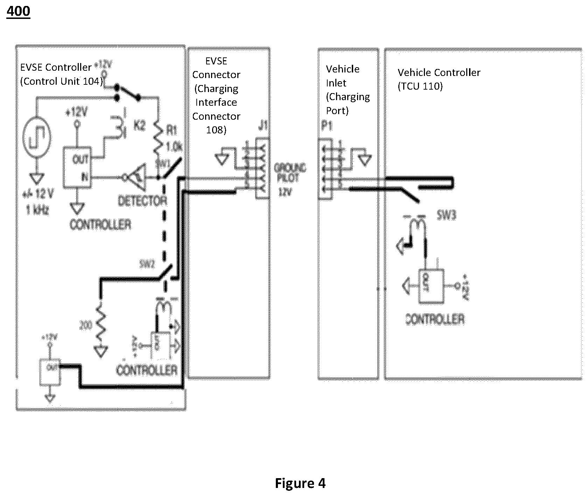

Figure 4 illustrates a circuit diagram 400 for a Light Vehicle (LV) charging communication protocol of the vehicle 10, in accordance with an exemplary embodiment of the present invention. In the LEVDC charging communication protocol of the vehicle 10, the switching unit SW1 is OFF/OPEN, switching unit SW2 is ON/CLOSED and switching unit SW3 on vehicle side is ON/CLOSED. The pin 4 of the EVSE connector (charging interface connector 108) is connected to the ground and the pin 5 is connected to 12V on the charging station 102. On the vehicle side, PP is connected to CP on closure of the switching unit SW3 and CP on the EVSE side (charging station 102) acts as a detection line. The pin on the charging station 102 is configured to act as a detection line. In LV charging communication protocol of the vehicle 10, the CP line is used only for the vehicle connection detection.

Advantageously, the present invention provides a system and a method for charging a vehicle with the help of a single charging station for all types of vehicles. Hence, the present invention is efficient and reliable as compared to the existing systems. The present invention provides a single charging interface connector for efficiently charging the battery pack of the vehicle. The single charging interface connector is configured to charge the vehicles with different charging communication protocols to meet the charging requirements and the needs of the user. Therefore, the present invention eliminates the issue of having different charging stations for different vehicles, thereby providing a cost-efficient solution. The present invention provides an efficient and economical solution to charge the battery pack of the vehicle of different charging communication protocol at a single charging station, including a LEVDC charging communication protocol and the CCS charging communication protocol, and therefore, eliminates the need of two different charging stations.

The present invention is directed towards designing a harmonized single vehicle charging interface connector configured for handling both the LEVDC and the CCS charging communication protocols of the vehicle. The present invention provides a system which incorporates a combination of both CCS and LEVDC charging communication protocol at different levels. By supporting both the CCS and LEVDC charging communication protocol at the charging station in the single charging interface connector gives the possibility to the user of the vehicle to charge the vehicle using a wider available pool of the charging stations such as a two/three/four-wheeled charging stations. Therefore, the present invention provides the communication interoperability, wherein the same vehicle is configured to be charged either from the four-wheeled charging station or a two/three-wheeled charging station. Further, the present invention provides the single charging interface connector which is configured to support both the charging communication protocols, thereby providing a cost-effective and market attractive solution. The present invention further reduces the overall parts count as well.

In light of the abovementioned advantages and the technical advancements provided by the disclosed system and method, the claimed steps as discussed above are not routine, conventional, or well understood in the art, as the claimed steps enable the following solutions to the existing problems in conventional technologies. Further, the claimed steps clearly bring an improvement in the functioning of the system itself as the claimed steps provide a technical solution to a technical problem.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable storage medium" should be understood to include tangible items and exclude carrier waves and transient signals, i.e., be non-transitory. Examples include random access memory (RAM), read-only memory (ROM), volatile memory, non-volatile memory, hard drives, CD ROMs, DVDs, flash drives, disks, and any other known physical storage media.

While the present invention has been described with respect to certain embodiments, it will be apparent to those skilled in the art that various changes and modification may be made without departing from the scope of the invention as defined in the following claims.

### List of Reference Numerals

10: Vehicle
10a: Two-wheeled Vehicle
10b: Three-wheeled Vehicle
10c: Four-wheeled Vehicle
100: System for Charging a Vehicle
102: Charging Station
104: Control Unit
106: Charging Management Unit
108: Charging Interface Connector
110a, 110b, 110c: Telematics Control Unit
112: Display Unit
200: Method for Charging a Battery Pack

## Claims

1. A system (100) for charging a vehicle (10), the system (100) comprising:
a charging station (102), the charging station (102) configured to support a plurality of charging communication protocols; and
a control unit (104) disposed in the charging station (102), the control unit (104) configured to:
interact with the vehicle (10) for receiving one or more pre-defined parameters;
extract protocol information indicative of a charging communication protocol of the vehicle (10) based on the one or more pre-defined parameters; and
initiate charging of the vehicle (10) based on the extracted protocol information, wherein upon receiving the protocol information of the vehicle (10), the control unit (104) switches the charging communication protocol of the charging station (102) to align with the charging communication protocol of the vehicle (10) for charging the vehicle (10).

2. The system (100) as claimed in claim 1, wherein the plurality of charging communication protocols comprises at least one of a Light Vehicle (LV) charging communication protocol and a Combined Charging System (CCS) charging communication protocol.

3. The system (100) as claimed in claim 1, wherein the one or more pre-defined parameters comprise user authentication information, payment information, and vehicle information.

4. The system (100) as claimed in claim 2, wherein the charging station (102) comprises a charging interface connector (108), the charging interface connector (108) being configured to support the plurality of charging communication protocols for catering to charging of low voltage vehicles and high voltage vehicles, and the control unit (104) being configured to alter a supply to a plurality of pins of the charging interface connector (108) based on the charging communication protocol of the vehicle (10).

5. The system (100) as claimed in claim 1, wherein the control unit (104) being configured to communicate with a charging management unit (106), the charging management unit (106) being configured to be in communication with a Telematics Control Unit (TCU) (110) of the vehicle (10).

6. The system (100) as claimed in claim 1, comprising a display unit (112), the display unit (112) being configured to be in communication with the control unit (104) and display a selected charging communication protocol of the charging station (102) to a user.

7. The system (100) as claimed in claim 4, wherein the control unit (104), upon detecting the LV charging communication protocol of the vehicle (10), being configured to switch the charging communication protocol of the charging station (102) to align with the LV charging communication protocol of the vehicle (10), and a control pilot line of the charging interface connector (108) being configured for detection of a connection of a vehicle charging port with the charging interface connector (108).

8. The system (100) as claimed in claim 7, wherein the control unit (104), upon detecting the CCS charging communication protocol of the vehicle (10), being configured to switch the charging communication protocol of the charging station (102) to align with the CCS charging communication protocol of the vehicle (10), and the control pilot line of the charging interface connector (108) being configured to function as a communication line between the vehicle charging port and the charging interface connector (108).

9. The system (100) as claimed in claim 1, wherein the control unit (104), based on an unsuccessful detection of the charging communication protocol of the vehicle (10), being configured to generate an error command.

10. A method (200) for charging a vehicle (10), the method (200) comprising:
receiving, by a control unit (104), one or more pre-defined parameters of the vehicle (10) based on an interaction with the vehicle (10);
extracting, by the control unit (104), protocol information indicative of a charging communication protocol of the vehicle (10) based on the one or more pre-defined parameters;
switching, by the control unit (104), the charging communication protocol of a charging station (102) to align with the charging communication protocol of the vehicle (10); and
initiating, by the control unit (104), charging of the vehicle (10) based on the charging communication protocol of the vehicle (10).

11. The method (200) as claimed in claim 10, wherein the plurality of charging communication protocols comprises at least one of a Light Vehicle (LV) charging communication protocol and a Combined Charging System (CCS) charging communication protocol.

12. The method (200) as claimed in claim 10, wherein the one or more pre-defined parameters comprise user authentication information, payment information, and vehicle information.

13. The method (200) as claimed in claim 10, the method (200) comprising the steps of:
altering a supply to a plurality of pins of a charging interface connector (108) based on the charging communication protocol of the vehicle (10), wherein the charging station (102) comprises the charging interface connector (108) configured to support the plurality of charging communication protocols for catering to charging of low voltage vehicles and high voltage vehicles; and
displaying, by a display unit (112), a selected charging communication protocol of the charging station (102) to a user.

14. The method (200) as claimed in claim 13, wherein the method (200) comprising the step of:
switching, by the control unit (104), the charging communication protocol of the charging station (102) to align with the LV charging communication protocol of the vehicle (10), based on a detection of the LV charging communication protocol of the vehicle (10), a control pilot line of the charging interface connector (108) is configured for detection of a connection of a vehicle charging port with the charging interface connector (108);
switching, by the control unit (104), the charging communication protocol of the charging station (102) to align with the CCS charging communication protocol of the vehicle (10), based on the detection of the CCS charging communication protocol of the vehicle (10), the control pilot line of the charging interface connector (108) being configured to function as a communication line between the vehicle charging port and the charging interface connector (108); and
generating, by the control unit (104), an error command, based on an unsuccessful detection of the charging communication protocol of the vehicle (10).
